# EUROPEAN PATENT SPECIFICATION

(11) **EP 1 654 392 B1**
(45) Date of publication and mention of the grant of the patent: **14.05.2008**
(21) Application number: 04736257.9
(22) Date of filing: 07.06.2004
(51) Int. Cl.: C22B 13/02, C01G 21/02, H01M 4/57

(54) **UTILIZATION OF LEAD SHAVINGS IN ABRASION MILLS FOR THE PRODUCTION OF LEAD OXIDE**
VERWENDUNG VON BLEISPÄNEN IN ABRIEB-BRECHANLAGEN ZUR HERSTELLUNG VON BLEIOXID
SYSTEME D'UTILISATION DE COPEAUX DE PLOMB DANS DES BROYEUSES PAR ABRASION DESTINEES A LA PRODUCTION D'OXYDE DE PLOMB

(30) Priority: 30.07.2003 IT CH20030013
(43) Date of publication of application: 10.05.2006
(73) Proprietor: Cam, S.r.l., 66022 Fossacesia (IT)
(72) Inventor: MARFISI, Armando, I-66034 Lanciano (IT); MARFISI, Bruno, I-66034 Lanciano (IT); MARFISI, Fernando, I-66034 Lanciano (IT)
(74) Representative: Leone, Mario
(86) International application number: PCT/IT2004/000328
(87) International publication number: WO 2005/012583

(56) References cited:
- WO-A-99/44942
- FR-A- 2 420 831
- US-A- 4 384 683
- US-A1- 2002 146 364
- DATABASE WPI Section Ch, Week 200232 Derwent Publications Ltd., London, GB; Class E36, AN 2002-271433 XP002303579 & IT 1 304 841 B (CAM SRL), 5 April 2001 (2001-04-05)
- DATABASE WPI Section Ch, Week 200150 Derwent Publications Ltd., London, GB; Class L03, AN 2001-462404 XP002303580 & KR 2001 001 006 A (UNIV GYEONGSANG NAT RES INST IND TECH), 5 January 2001 (2001-01-05)
- DATABASE WPI Section EI, Week 200401 Derwent Publications Ltd., London, GB; Class U11, AN 2004-006617 XP002303581 & KR 2003 066 032 A (SAMSUNG ELECTRONICS CO LTD), 9 August 2003 (2003-08-09)
- DATABASE EPODOC [Online] EUROPEAN PATENT OFFICE, THE HAGUE, NL; "Preparation of lead oxide powder by wet-milling oxidation method" XP002305986 & CN 1 045 957 A (STATE OPERATED NO. 752 FACTORY) 10 October 1990 (1990-10-10)

## Description

### 1. Technical field

Abrasion mills for the production of lead oxide, like those utilized in the energy storage industry, function through the utilization of lead elements which are adequately titrated according to the oxidation process for which the mill has been created.

The lead used is produced in titration and ingot - producing pots. The ingots are then transformed into elements of different shapes and dimensions for use in the mills. The shape, size, molecular structure and the other chemical - physical properties of the lead elements put into the mills, and which make up the "ballast", are fundamental for the good results of the oxidation process, and for the overall cost of the oxide production process.

### 2. Background art

Through the years, the production of material to be used in abrasion mills has undergone an evolution which has led to several different solutions.

Document US-A-2002/014364 discloses the production of lead oxide by ball milling solid lead particles in the presence of a controlled rate of air movement. The oxidation rate is enhanced by using melt-produced lead particles containing a small amound of magnesium.

At first, ingots of pure material were used to feed these mills. Although this technique reduces the number of passages to a minimum, it presents numerous disadvantages from the point of view of oxidation process control and yield. Oxidation is a superficial process, and the external surface - volume ratio of the ingots is low. Moreover, this method does not favor the passage of air through the mill ballast during the oxidation phase, thus reducing the yield of the process.

An important step was made when the ingots were broken down into portions (4, 5 pieces). This intermediate method was an improvement on the first, but maintained the same problems.

Many mills utilize a more complex technique with the aim of optimizing the raw materials, although the plant costs considerably more to build and run. The pure lead bars are melted again, molded into cylinders, cooled and matured before being loaded into the mill. This method produces a higher yield of oxide but has created the following serious complications in the system:
- Higher costs for the slug casting machine; higher costs for personnel to run these machines;-
- Higher running costs for safety and management of another lead melting plant;
- Higher costs of conveyor systems for high temperature materials;
- More space needed for storage areas preceding the mill area;
- Production and management of waste in the slug casting melt pots with a waste of material and problems for its management, re-utilization and elimination;
- Need to plan production in consideration of the great amount of time needed for start up and shut down of the melt pots for the slug casters;

### 3. Disclosure of invention, best mode for carrying out and industrial applicability

Abrasion mills for the production of lead oxide call for the use of mechanically produced lead havings, formed directly from ingots or other adequately titrated lead bars. The flat, helical lead shavings are formed by specially designed machinery and are considerably smaller than the other types. The mechanical compression and shear action carried out by the machine on the cut material produces a compression and extension stress which stresses the surface, making it rough and subject to flaking. The mechanical compression favors hardening of the surface of the shaving. These shavings are therefore ready for immediate use inside the mill, with no need for aging.

By virtue of the shape, size and molecular structure, these shavings increase the yield of the oxidation process inside the mill for the following reasons:
- The flat shape increases the external surface - volume ratio, exposing as much material as possible to oxidation and reducing the thermal gradient between the outer and inner areas of each single shaving.
- The helical shape favors the passage of air through the ballast inside the mill, increasing the surface exposed to oxidation and enhancing uniformity of the temperature through the ballast. This second element improves process control and thus increases the quality of the oxide produced, reducing the risk of overheating and the consequent formation of orthorhombic oxide (Massicot).
- The hardening of the shavings' surface increases the abrasion coefficient in the mill ballast, enhancing the heat generated by the abrasion, which is fundamental to the oxidation reaction.
- The stressed surface of the shaving tends to flake and release micro-flakes during the rotation of the ballast in the mill, which rapidly offer another surface to the oxidation process.

Another advantage is that abrasion mills fed with shavings for lead oxide production drastically simplify the process system antecedent to the mills and the relative running in the following way:
- The mechanical production of the shaving is quick and waste-free, as opposed to fusion processes like slug casters, which produce a great quantity of waste but require ad hoc storage, re-use or waste processing systems, due to the particular nature of the material.
- The shavings do not need to be stored or aged before using in the mill, thus reducing the volume of the intermediate storage areas and the need to plan and balance production for the line.
- The shavings do not undergo thermal treatment which would change the composition of the previously titrated material, thus assuring the quality of the ballast inside the mill.
- Shavings can be produced using simple machinery, low cost and low running costs in terms of number and qualification of the personnel running it.
- The machinery for producing these shavings is utilizable immediately on the basis of the material needed to feed the mill, because they practically do not need long start up or shut down operations.
- The use of machinery for producing shavings reduces safety and environmental risks and requirements to a minimum (high temperatures, risk of fire, harmful vapors), increases hourly productivity, in particular as compared to the slug casters used at present, which require the fusion of lead.

## Claims

1. Method of feeding an abrasion mill for the production of lead oxide, comprising the steps of:
(a) providing titrated lead in the form of ingots;
(b) reducing said ingots in shavings having a helical shape; and
(c) feeding the abrasion mill with said shavings.

2. Method of feeding an abrasion mill according to claim 1, wherein the ingots are reduced in shavings by cold cutting.

3. Use of titrated lead in the form of shavings having a helical shape for feeding an abrasion mill for the production of lead oxide.

4. Use of titrated lead in the form of shavings according to claim 3, wherein the shavings are obtained by cold cutting.

## Patentansprüche

1. Verfahren zur Beschickung einer Abriebmühle für die Herstellung von Bleioxid, die Schritte umfassend:
(a) Bereitstellen von reinem Blei in der Form von Barren,
(b) Zerkleinerung der Barren in Späne, die eine helikale Form besitzen und
(c) Beschicken der Abriebmühle mit den Spänen.

2. Verfahren zur Beschickung einer Abriebmühle nach Anspruch 1, worin die Barren durch Kaltschneiden in Späne zerkleinert werden.

3. Verwendung von reinem Blei in der Form von Spänen, die eine helikale Form besitzen, zur Beschickung einer Abriebmühle für die Herstellung von Bleioxid.

4. Verwendung von reinem Blei in der Form von Spänen nach Anspruch 3, worin die Späne durch Kaltschneiden erhalten werden.

## Revendications

1. Procédé d'alimentation d'un broyeur par abrasion pour la production d'oxyde de plomb ; comprenant les étapes consistant à :
(a) fournir du plomb titré sous la forme de lingots ;
(b) réduire lesdits lingots en copeaux ayant une forme hélicoïdale ; et
(c) alimenter le broyeur par abrasion avec lesdits copeaux.

2. Procédé d'alimentation d'un broyeur par abrasion selon la revendication 1, dans lequel les lingots sont réduits en copeaux par découpage à froid.

3. Utilisation de plomb titré sous la forme de copeaux ayant une forme hélicoïdale pour l'alimentation d'un broyeur par abrasion pour la production d'oxyde de plomb.

4. Utilisation de plomb titré sous la forme de copeaux selon la revendication 3, dans laquelle les copeaux sont obtenus par découpage à froid.
